## Europäisches Patentamt
## European Patent Office
## Office européen des brevets

(11) Veröffentlichungsnummer: **0 059 703**
**B1**

(12) # EUROPÄISCHE PATENTSCHRIFT

(45) Veröffentlichungstag der Patentschrift:
02.01.85

(51) Int. Cl.³: **A 63 C 5/00**, B 32 B 33/00,
B 44 C 5/04

(21) Anmeldenummer: 82890028.2

(22) Anmeldetag: 25.02.82

(54) Verfahren zur Herstellung eines flexiblen Skibelages.

(30) Priorität: 25.02.81 AT 867/81

(43) Veröffentlichungstag der Anmeldung:
08.09.82 Patentblatt 82/36

(45) Bekanntmachung des Hinweises auf die Patenterteilung:
02.01.85 Patentblatt 85/1

(84) Benannte Vertragsstaaten:
AT CH DE FR LI SE

(56) Entgegenhaltungen:
AT - A - 312 472
AT - A - 362 691
DE - A - 2 056 275
DE - A - 2 424 880
FR - A - 2 421 071
US - A - 3 551 241

(73) Patentinhaber: ISOVOLTA Österreichische Isolierstoffwerke Aktiengesellschaft, Industriezentrum-Süd, A-2351 Wiener Neudorf (AT)

(72) Erfinder: Eichberger, Walter, Dr., Beatrixgasse 4a, 2380 Perchtoldsdorf (AT)
Erfinder: Blaschke, Alfred, Dr., Mühlgasse 4, 2353 Guntramsdorf (AT)

(74) Vertreter: Stampfer, Heinz, ISOVOLTA Österreichische Isolierstoffwerke AG Industriezentrum-Süd, A-2351 Wiener Neudorf (AT)

BUNDESDRUCKEREI BERLIN

**Beschreibung**

Die Erfindung betrifft ein Verfahren zur Herstellung eines flexiblen Skibelages, bei dem eine Trägerschicht erzeugt wird, die zumindest zum Teil aus mit Kunstharz imprägniertem Fasermaterial besteht, deren Oberseite mit einem dekorativem Aufdruck versehen ist, und bei dem diese Trägerschicht an ihrer Oberseite mit einer transparenten oder durchscheinenden Kunststoffolie als Deckschicht verbunden wird.

Ein Verfahren dieser Art ist aus der AT-A-312 472 der Anmelderin bekannt. Es hat sich bis jetzt aber noch nicht im großen Umfang durchsetzen können. Dies mag seine Gründe darin haben, daß sich eine maßgenaue Reproduzierung des Dekormusters auf dem Ski bei dem bisher bekannten Verfahren dieser Art als schwierig erwiesen hat.

Hier will die Erfindung Abhilfe schaffen. Die Erfindung, wie sie in den Ansprüchen gekennzeichnet ist, ermöglicht auf einfache Weise eine maßgenauere Reproduzierung des Dekormusters auf dem Ski bei gleicher hoher Produktqualität.

Bei der Herstellung von Schichtstoffplatten mit dekorativer Oberfläche durch Heißverpressen von mit Kunstharz imprägnierten Papieren wurde bis jetzt der Dekordruck regelmäßig nach der Papierherstellung auf die noch unimprägnierte Papierbahn aufgebracht. Das bedruckte sogenannte Dekorpapier verzieht sich bei der Imprägnierung aber in nicht ganz kontrollierbarer Weise, was bei den üblichen Verwendungen von Schichtstoffplatten normalerweise aber nicht stört.

Die Anmelderin hat nun gefunden, daß diese Verzierung der Dekorpapiere und damit die des aufgedruckten Dekormusters zu einer nicht ausreichend genau maßhaltigen Reproduzierung des Dekormusters am Skibelag führen würde.

Diese Nachteile werden bei dem erfindungsgemäßen Verfahren vermieden, da sich das imprägnierte Papier, in dem sich das Imprägnierharz im B-Zustand befindet, in den weiteren Verfahrensschritten nicht mehr verzieht, so daß der auf das imprägnierte Papier maßgenau aufgebrachte Dekordruck am verpreßten Laminat verzerrungsfrei reproduziert wird.

Durch das erfindungsgemäße Verfahren wird überdies eine optimale Disposition in der Produktion erleichtert: Man kann nämlich die imprägnierten, unbedruckten Papiere, die sogenannten Halbfabrikate, zunächst in größeren Partien herstellen und sie, da ihre Lagerfähigkeit u. U. mehrere Monate beträgt, auf ein Zwischenlager geben. Das Bedrucken dieser Halbfabrikate kann dann auch kurz vor ihrer Weiterverarbeitung entsprechend dem eintretenden Bedarf stattfinden, so daß Skilaminate eines bestimmten Dekors kurzfristig hergestellt werden können.

Die Erfindung wird nachstehend anhand von zwei den beiden Beispielen entsprechenden Ausführungswegen näher erläutert. Bei diesen Beispielen werden zur Herstellung der zu verpressenden, als Skibeläge dienenden Laminate folgende Komponenten vorbereitet:

A. Ein mit Epoxyharz imprägniertes Glasgewebe (Epoxydharz-Glasgewebeprepreg) aus einem unidirektionalen Rovinggewebe mit einem Flächengewicht von 705 g/m², das durch Imprägnierung mit einem durch einen Zusatz eines Phenol-Formaldehydharzes modifizierten Epoxydharz in B-Zustand mit einem Harzauftrag von 50 Gew.-% (Feststoff) versehen wurde.

B. Ein mit Melaminharz imprägniertes Papier (Melaminharz-Papierprepreg) aus einem Baumwollpapier mit einem Flächengewicht von 200 g/m² imprägniert mit einem durch Verätherung modifizierten Melaminharz in B-Zustand bei einem Harzauftrag von 70 Gew.-% (Feststoff). Gemäß einer vorteilhaften Variante kann das eingesetzte Baumwollpapier als Grunddekor eine Unifarbe haben, wobei die Farbpigmente, welche vorteilhaft einen Metalliceffekt aufweisen können, bereits bei der Papierherstellung ein- bzw. aufgebracht werden. Nach einer weiteren vorteilhaften Variante kann das Grunddekor auch einen insbesondere im Offsetdruckverfahren auf dem unimprägnierten Papier hergestellten Aufdruck z. B. in Form eines Streudruckes aufweisen.

C. Eine 0,07 mm dicke Acrylharzfolie, welche die chemischen Gruppen —OH, —CH₂OH und —COOH als reaktive Gruppen enthält.

Beispiel 1

Die Komponenten A bis C, die in Bahnenform erzeugt wurden, werden in Einzelblätter unterteilt und die Hälfte der Menge der Melaminharz-Prepregs (B) einseitig mittels eines Siebdruckverfahrens im Stückdruck mit dem gewünschten Dekor versehen. Darauf werden jeweils, in nachstehender Reihenfolge, aus einem Glasgewebeprepreg (A), einem unbedruckten Papierprepreg (B) und einem bedruckten Papierprepreg (mit der Druckseite nach oben) und der Acrylharzfolie (C) ein Stapel geformt. Die so gebildeten Stapel werden in eine Mehretagenpresse eingebracht und bei Preßoberflächentemperaturen von 165° C bis 170° C und einem Preßdruck von 600 N/cm² während einer Zeit von mindestens 45 min verpreßt und das fertige Laminat nach Rückkühlung der Presse entnommen.

Gemäß einer vorteilhaften Variante von Beispiel 1 weisen die Oberflächen der in der Mehretagenpresse einzusetzenden Preßplatten bzw. Matrizen, welche an den Dekorseiten der zu verpressenden Stapel zu liegen kommen, eine Oberflächenstruktur auf, die sich beim Heißverpressen in die Dekoroberflächen des zu erzeugenden Laminats einprägt.

### Beispiel 2

Aus den Komponenten A bis C sowie einem mittels eines Rollen- oder Stückdruck-Siebdruckverfahrens mit dem gewünschten Dekor versehenen Papierprepreg (B) werden, in analoger Weise wie gemäß Beispiel 1, ein Glasgewebeprepreg (A), ein unbedrucktes sowie ein bedrucktes Papierprepreg (B) und eine Acrylharzfolie (C) jeweils in Bahnenform aufeinander zu einem Verbund zusammengefügt und in einer beheizten Doppelbandpresse zu einem bandförmigen Laminat verpreßt. In der Doppelbandpresse, die eine Heizzone und eine daran anschließende Abkühlzone aufweist, erfolgt bei einem Preßdruck von 350 N/cm² in der Heizzone das Verpressen des Verbundes zu einem Laminat bei einer Verweildauer von 10 min und einer Preßoberflächentemperatur von 175° C und in der Abkühlzone die Rückkühlung des Laminats auf etwa 90° C.

## Patentansprüche

1. Verfahren zur Herstellung eines flexiblen Skibelages, bei dem eine Trägerschicht erzeugt wird, die zumindest zum Teil aus mit Kunstharz imprägniertem Fasermaterial besteht, deren Oberseite mit einem dekorativen Aufdruck versehen ist und bei dem diese Trägerschicht an ihrer Oberseite mit einer transparenten oder durchscheinenden flexiblen Kunststoffolie als Deckschicht verbunden wird, dadurch gekennzeichnet, daß zur Erzeugung der Trägerschicht Papierbahnen mit einem zum Zwecke der Elastifizierung modifizierten Melaminharz imprägniert, unter Überführung des Imprägnierharzes in den B-Zustand getrocknet und danach mit dem dekorativen Aufdruck versehen werden, daß man aus einer dieser bedruckten Papierbahnen und gegebenenfalls anderen an der Trägerschicht-Unterseite angeordneten flächigen Komponenten einen mehrschichtigen, die Trägerschicht bildenden Verbund oder Stapel formt, der an seiner Oberseite mit der einzusetzenden transparenten oder durchscheinenden Kunststoffolie abgedeckt wird, die in ihrem chemischen Aufbau reaktive Gruppen aufweist, welche geeignet sind, mit dem Imprägnierharz der Papierbahnen abzureagieren, und daß das Ganze hernach in einer beheizten Presse bei Preßoberflächentemperaturen von mehr als 120° C verpreßt wird, wobei sich die Einzellagen des Verbundes oder Stapels zu einem flexiblen Laminat verbinden.

2. Verfahren nach Anspruch 1, dadurch gekennzeichnet, daß die Verpressung bei Preßoberflächentemperaturen von mehr als 150° C erfolgt.

3. Verfahren nach Anspruch 1 oder 2, dadurch gekennzeichnet, daß der dekorative Aufdruck mittels eines Siebdruckverfahrens hergestellt wird.

4. Verfahren nach einem der Ansprüche 1 bis 3, dadurch gekennzeichnet, daß die mit dem modifizierten Melaminharz zu imprägnierenden Papierbahnen eine Unifarbe oder einen Aufdruck als Grunddekor aufweisen.

5. Verfahren nach Anspruch 4, dadurch gekennzeichnet, daß die Unifarbe des Papiers oder der Aufdruck des Grunddekors durch Pigmente mit Metalliceffekt hergestellt sind.

6. Verfahren nach Anspruch 4 oder 5, dadurch gekennzeichnet, daß der Aufdruck des Grunddekors mittels Offsetdruck erfolgt.

7. Verfahren nach einem der Ansprüche 1 bis 6, dadurch gekennzeichnet, daß die an der Unterseite im Verbund oder Stapel der Trägerschicht eingesetzten flächigen Komponenten zumindest zum Teil aus Glasgewebelagen bestehen, die mit einem Epoxydharz in B-Zustand imprägniert sind.

8. Verfahren nach einem der Ansprüche 1 bis 7, dadurch gekennzeichnet, daß die zu einem Verbund vereinigten Komponenten der Trägerschicht und die Kunststoffschicht als Deckschicht jeweils in Bahnenform eingesetzt werden und der Verbund in einer beheizten Doppelbandpresse zu dem flexiblen Laminat verpreßt wird.

9. Verfahren nach einem der Ansprüche 1 bis 8, dadurch gekennzeichnet, daß zumindest die beim Heißverpressen des Verbundes oder Stapels an dessen Dekorseite zu liegen kommende Preßoberfläche eine Oberflächenstruktur aufweist, die sich in die Oberfläche des zu erzeugenden Laminats einprägt.

## Claims

1. Process for producing a flexible ski coating, wherein a carrier layer is prepared, which consists partially of fibre material impregnated with synthetic resin and the top side of which is provided with a decorative imprint, and wherein the top side of this carrier layer is bonded to a transparent or translucent flexible plastic film as a covering layer, characterised in that, for preparing the carrier layer, paper webs are impregnated with a melamine resin modified for elasticisation, are dried with the impregnating resin being converted into the B-state and are then provided with the decorative imprint, in that, from one of these imprinted paper webs and, if appropriate, other two-dimensional components located on the underside of the carrier layer, a multi-layer composite or stack is formed which represents the carrier layer and which, on its top side, is covered by the transparent or translucent plastic film which is to be employed and which, in its chemical structure, possesses reactive groups which are suitable for undergoing a complete reaction with the impregnating resin of the paper webs, and in that subsequently the whole is pressed in a heated press at press surface temperatures of more than 120° C, the individual layers of the composite or stack being bonded to give a flexible laminate.

2. Process according to Claim 1, characterised in that the pressing is carried out at press surface temperatures of more than 150°C.

3. Process according to Claim 1 or 2, characterised in that the decorative print is produced by means of a screen-printing process.

4. Process according to one of Claims 1 to 3, characterised in that the paper webs, which are to be impregnated with the modified melamine resin, have a plain colour or an imprint as the basic decor.

5. Process according to Claim 4, characterised in that the plain colour of the paper or the imprint of the basic decor has been produced by means of metallic-effect pigments.

6. Process according to Claim 4 or 5, characterised in that the imprint of the basic decor is produced by means of offset printing.

7. Process according to one of Claims 1 to 6, characterised in that the two-dimensional components, employed on the underside in the composite or stack of the carrier layer, consist partially of plies of glass fabric, which have been impregnated with an epoxide resin in the B-state.

8. Process according to one of Claims 1 to 7, characterised in that the components of the carrier layer, which have been combined to give a composite, and the plastic layer as the covering layer are each used in the form of webs, and the composite is pressed in a heated continuous laminating press to give the flexible laminate.

9. Process according to one of Claims 1 to 8, characterised in that at least that press surface which, on hotpressing of the composite or stack, comes to lie on the decor side thereof has a surface structure which is embossed into the surface of the laminate to be produced.

**Revendications**

1. Procédé de fabrication d'un revêtement de ski flexible, dans lequel on produit une couche porteuse, qui se compose au moins en partie d'une matière fibreuse imprégnée de résine synthétique et dont le côté supérieur est pourvu d'une impression décorative, et dans lequel cette couche porteuse est reliée sur son côté supérieur avec une feuille de matière plastique flexible transparente ou translucide servant de couche de recouvrement, caractérisé en ce que, pour produire la couche porteuse, des bandes de papier sont imprégnées d'une résine de mélamine modifiées dans un but d'élastification, séchées pour faire passer la résine d'imprégnation dans l'état B et pourvues ensuite de l'impression décorative, en ce qu'on forme à partir d'une de ces bandes de papier imprimé et, le cas échéant, d'autres composants plats disposés sur le côté inférieur de la couche porteuse, un assemblage ou pile à plusieurs couches formant la couche porteuse, qui est recouvert sur sa face supérieure d'une feuille de matière plastique transparente ou translucide rapportée qui contient dans sa composition chimique des groupes réactifs qui sont appropriés pour réagir avec la résine d'imprégnation des bandes de papier et en ce que l'ensemble est ensuite pressé dans une presse chauffée à des températures en surface supérieures à 120°C, les couches individuelles de la structure composite ou pile étant liées pour former un produit stratifié flexible.

2. Procédé selon la revendication 1, caractérisé en ce que le pressage est effectué avec des températures de la presse en surface supérieures à 150°C.

3. Procédé selon la revendication 1 ou 2, caractérisé en ce que l'impression décorative est réalisée au moyen d'un procédé d'impression au tamis.

4. Procédé selon l'une des revendications 1 à 3, caractérisé en ce que les bandes de papier à imprégner à la résine de mélamine modifiée comportent comme décor de base une coloration uniforme ou bien une impression.

5. Procédé selon la revendication 4, caractérisé en ce que la coloration uniforme du papier ou l'impression du décor de base sont réalisées par des pigments à effet métallique.

6. Procédé selon la revendication 4 ou 5, caractérisé en ce que l'impression du décor de base est effectuée par une impression en offset.

7. Procédé selon l'une des revendications 1 à 6, caractérisé en ce que les composants plats rapportés sur le côté inférieur de la structure composite ou pile de la couche porteuse se composent au moins en partie de couches de tissu de verre, qui sont imprégnées d'une résine époxyde dans l'état B.

8. Procédé selon l'une des revendications 1 à 7, caractérisé en ce que les composants de la couche porteuse, réunis sous forme d'une structure composite, et la couche de matière plastique servant de couche de recouvrement, sont rapportés respectivement sous forme de bandes et la structure composite est pressée dans une presse chauffée à double bande pour former le produit stratifié flexible.

9. Procédé selon l'une des revendications 1 à 8, caractérisé en ce qu'au moins la surface de presse venant se placer, lors du pressage à chaud de la structure composite ou de la pile sur le côté décoré de cell-ci, présente une structure de surface qui s'incruste dans la surface du produit stratifié à réaliser.